Europäisches Patentamt

European Patent Office

Office européen des brevets

(11) Publication number: **0 029 873**
**A1**

(12) # EUROPEAN PATENT APPLICATION

(21) Application number: **79302767.3**

(22) Date of filing: **03.12.79**

(51) Int. Cl.³: **A 01 K 11/00**

(43) Date of publication of application:
**10.06.81 Bulletin 81/23**

(84) Designated Contracting States:
**AT BE CH DE FR IT LU NL SE**

(71) Applicant: **Fearing International (Stock-Aids) Limited**
**12 Chater Street**
**Moulton, Northampton, NN3 1UD(GB)**

(72) Inventor: **Hattersley, Robert Merlin**
**12 Chater Street**
**Moulton Northampton, NN3 1UD(GB)**

(74) Representative: **Hallam, Arnold Vincent et al,**
**E.N. LEWIS & TAYLOR 144 New Walk**
**Leicester LE1 7JA(GB)**

(54) **A tag and a device for applying the tag to an ear of an animal.**

(57) A device for applying a two-part tag to an ear of an animal characterised in that there is provided first and second jaws (12,14) fixed relative to one another and spaced apart a sufficient distance for receiving therebetween an ear of an animal, said first jaw (12) having means for supporting a first, female member (55) of the tag (50); means (16) for engaging and supporting the second, male member (52) of said tag, said means being movable relative to said second jaw and biassed towards a retracted position; a trigger (36) actuable to extend said means (16) from a first position through a second position towards said first jaw (12) for driving the male member (52) of the tag through the ear of the animal and through the female member (55) of the tag; and wherein movement of said trigger (36) through said second position releases said means (16) to allow said means to return to said retracted position.

./...

FIG. 2

FIG. 1

A Tag and a Device for applying the tag to an ear of an animal

The present invention relates to devices for applying tags, for example to the ears of animals, to enable the animals to be easily identified.

One known type of device comprises a blade having a sharpened end of substantially V-shape and being mounted in a holder of plastics or other suitable material. The blade has a forwardly inclined spigot which engages in a co-operating hole in a tag and, as the blade pierces and is pushed through an ear of an animal by hand carries the tag with it. Because of the forward inclination of the spigot withdrawal of the blade from the ear disengages the spigot from the tag leaving the latter in the ear.

A disadvantage of the known device is the potential danger to user and the insecurity of the tage on the device. Because the shape and inclination of the spigot requires the latter to be disengaged easily from the tag when the blade is withdrawn the spigot does not provide a secure mounting of the tag on the blade and the somewhat dangerous "naked" blade form is not popular with users.

The present invention seeks to overcome this disadvantage.

Accordingly the present invention provides a device for applying a two-part tag to an ear of an animal characterised in that there is provided first and second jaws fixed relative to one another and spaced apart a sufficient distance for receiving therebetween an ear of an animal, said first jaw having means for supporting a first, female member of the tag; means for engaging and supporting the second, male member of said tag, said means being movable relative to said second jaw and biassed towards a retracted position; a trigger actuable to extend said means from a first position through a second position towards said first jaw for driving the male member of the tag through the ear of the animal and through the female member of the tag; and wherein movement of said trigger through said second position releases said means to allow said means to return to said retracted position.

A device according to the present invention has the advantage that it is safe and easy to use.

A disadvantage with tags made of plastics material is that it can be extremely difficult to force the tag through an ear of an animal, owing to a lack of hardness and rigidity of the tag head and the toughness of the ear. Tags of harder, less resilient material are considerably more expensive and when made of metal are prone to corrosion.

The present invention also provides a tag comprising a first male member and a second female member, the first member having a head for penetrating the ear of an animal and a base connected to the head for anchoring the tag in the ear, the second member having an opening for receiving the head in a snap-fitting manner, characterised in that there is provided a cap for said head, said cap being of a hard material for assisting penetration of said ear.

The present invention is further described hereinafter, by way of example, with reference to the accompanying drawings, in which:-

Figure 1 is a side elevation partly in section of one embodiment of a device according to the present invention; and

Figure 2 is a perspective view of a two-piece tag for use with the device of Figure 1.

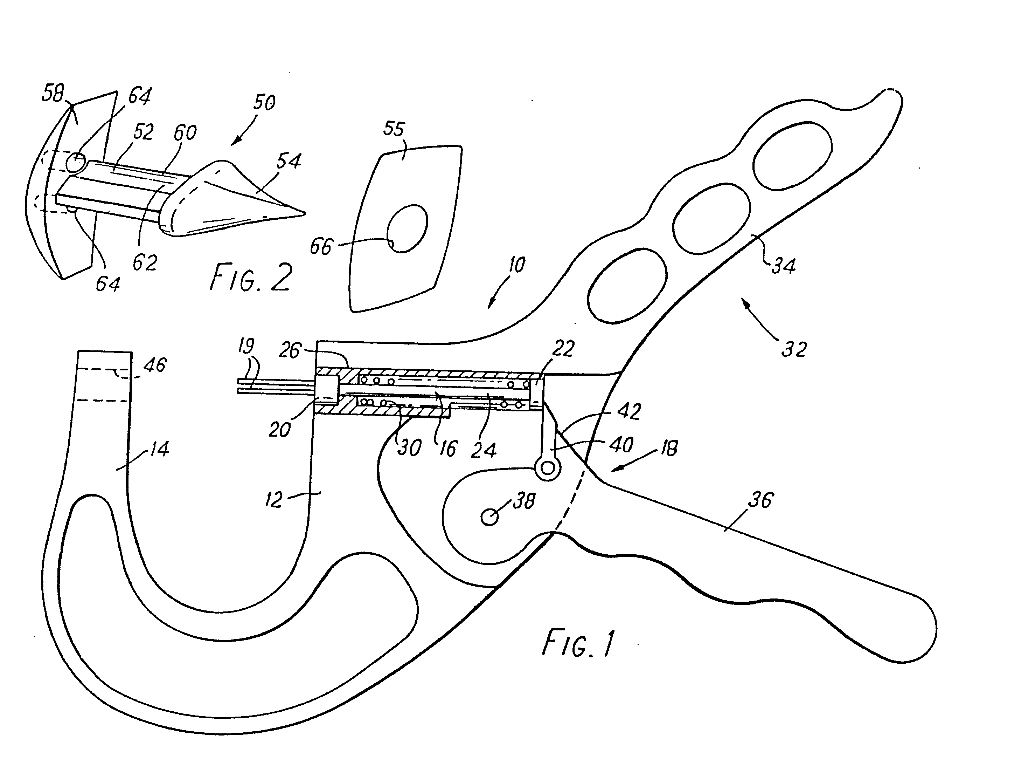

The device 10 of Figure 1 has a metal or platics material frame which comprises first and second fixed jaws 12 and 14 spaced apart sufficiently to receive therebetween an ear (not shown in the drawings) of an animal to be tagged. The jaw 12 slidably mounts a first member in the form of a slide 16 which is displaceable towards the jaw 14 by the action of a trigger 18. The slide 16 is shown in its retracted, rest position and comprises two parallel prongs 19 regidly secured to and projecting from a piston 20. The latter is coaxially connected with a further piston 22 by a rod 24. The slide 16 is mounted in a guide 26 which is substantially cylindrical in shape (the cross-sectional shape of the guide 26 is suited to the cross-sectional shape of the slide 16 and may be of any convenient configuration) and has a reduced diameter portion 28 adjacent its left hand end, as seen in the drawing, which serves as a stop for the slide 16. The rod 24 is slidably mounted in this reduced diameter portion and the slide is biasssed into its illustrated retracted position by suitable resilient means such as a coil spring 30 which is coaxial with the rod 24. One end of the spring 30 abuts the piston 22 and the other end abuts the reduced diameter portion 28.

The slide 16 is displaced forward by the action of the trigger 18 which comprises an arm 36 pivotable about a pivot 38. The arm 36 cooperates with a hand grip in the form of an arm 34 which is rigidly secured to or integral with the frame of the device. The arm 36 is in the form of a second order lever and carries a pawl 40 which, in its extreme clockwise rotated position abuts a stop in the form of a flange 42 of the arm 36. The pawl is conveniently biassed into its extreme clockwise position by resilient means such as a coil spring or torsion spring (not shown in the drawings). Pivoting of the arm 36 in an anticlockwise direction brings the pawl 40 into engagement with the piston 22 to drive the latter to the left as seen in Figure 1.

One form of tag which may be used with the above-described device is shown in Figure 2. The tag 50 is a two part tag having a male member 52 and a female member 55. The portion 52 has a pointed head 54 coupled to a base 58 by an elongate portion 60. The elongate portion 60 has longitudinal grooves 62 (only one of which is shown) on the upper and lower surfaces of the portion 60 for receiving the prongs 19 of the slide 16 and in use is mounted on the prongs 19 with the latter passing through holes 64 in the base 58 and lying in the grooves 62 gripping the member 52 between the prongs 19. It is preferable if the spacing of the prongs 19 is slightly less than that of the grooves 62 and the prongs 18 are resilient to ensure retention of the member 52 on the prongs 19.

In use the head 54 is forced through an animal's ear and a hole 66 in the tag member 55 with the animal's ear being gripped between the base 58 and the member 55. The tag member 55 is mounted on the projection 14 with the holes 46 and 66 aligned. The mounting (not shown) for the member 55 may be simply parallel grooves which slidingly receive the lateral edges of the member 55 or a snap catch or similar. The hole 66 is of slightly smaller diameter than the head 54 and deforms to allow passage of the head 54 receiving the latter in a snap-fitting manner. Either or both the member 55 and the head 54 are made of resilient material.

The tag is conveniently moulded from plastics material and it may be preferable to provide a cap (not shown) of harder material such as metal to cover the head 54 and assist penetration of the animal's ear and the hole 66. The cap is of course removed after the tag is affixed in ear. The shape of the cap conveniently conforms to the shape of the head 54 but may be of any suitable shape such as conical or in the shape of a partially flattened cone. The cap may be retained on the head 54 by means such as a groove or grooves in the head 54 cooperable with longitudinal ribs inside the cap, or vice versa.

To operate the device a user grips the handgrip 32, and thus the arm 36, in one hand pivoting the latter towards the arm 34, thus bringing the pawl 40 into engagement with the piston 22 and driving the slide 16 forward. The prongs 19 thus abut the head 54 and carry forward the male tag member 52 whose head 54 pierces the ear and then snaps through the opening 66 in the female tag member 55. In the operation the ear is supported by the projection 14 which has an opening 46 into which the tag head 54 passes.

At its fully extended position the slide 16 has carried the head 54 of the tag through the ear and the tag member 55 and the pawl 40 having moved through an arc in an anticlockwise direction to push the slide into its forwardmost position clears the piston 22 allowing the slide 16 to be returned to the retracted position by the spring 30. The spring 30 ensures a rapid and forceful withdrawl of the slide 16 leaving the tag securely located in the ear and ensuring minimal damage to the ear of the animal should it suddenly move its head during the operation.

Release of the trigger allows the arm 36 to be returned to its rest position by suitable biasing means such as a coil or torsion spring (not shown). The pivoting of the pawl 40 allows it to ride past the piston 22 ready for the next operation.

As regards the prongs 19 although only two are described the number may be varied as required with a corresponding number of grooves in the tag. A single prong may be used, fitting into for example a bore (not shown) in the tag. A bore or bores may be provided in addition to or alternatively to the grooves 62. The prongs 19 may be detachably mounted on the piston 20 to enable different style "heads" to be attached to the piston 20 for different types of tag.

In a further embodiment (not shown) of a device according to the present invention the slide is driven forward by compressed gas such as air applied to, for example a piston coupled to the slide or integral therewith. The compressed gas may be provided by a compressed gas capsule or from a remote source coupled to the devices via a flexible gas line. Another form of power source could be an extremely powered electro-magnet acting through a suitably located coil and levers to slide 16.

While the above described device is primarily intended for tagging animals it can of course be used in other circumstances such as tagging bags or parcels.

In a further embodiment of the present invention the retracted position of the slide 16 is adjustable. The piston 22 is mounted on the rod 24 by means of a screw thread such that rotation of the rod 16 varies the position of the piston 22 along the rod 24. The latter may project through the piston to allow user access to rotate the rod 24.

Claims:-

1. A device for applying a two-part tag to an ear of an animal characterised in that there is provided first and second jaws fixed relative to one another and spaced apart a sufficient distance for receiving therebetween an ear of an animal, said first jaw having means for supporting a first, female member of the tag; means for engaging and supporting the second, male member of said tag, said means being movable relative to said second jaw and biassed towards a retracted position; a trigger actuable to extend said means from a first position through a second position towards said first jaw for driving the male member of the tag through the ear of the animal and through the female member of the tag; and wherein movement of said trigger through said second position releases said means to allow said means to return to said retracted position.

2. A device as claimed in claim 1 wherein said engaging means is an elongate member slidable in a guide of the second jaw and has means for carrying said male tag member thereon whereby when said trigger is actuated said engaging means is driven forward to cause said male tag member to engage and force an opening in the ear of the animal.

3. A device as claimed in claim 1 or 2 wherein said engaging means has at least one prong for carrying the male tag member thereon.

4.. A device as claimed in claim 3 wherein said engaging means has two said prongs.

5.. A device as claimed in any of claims 1 to 4 wherein said trigger comprises a lever pivotable from its rest position to bring a pawl into engagement with said engaging means for projecting said engaging means forwardly.

6. A device as claimed in claim 5 wherein said lever is a second order lever which mounts said pawl.

7. A tag for use with a device as claimed in any of claims 1 to 6 comprising a first male member and a second female member, the first member having a head for penetrating the ear of an animal and a base connected to the head for anchoring the tag in the ear, the second member having an opening for receiving the head in a snap-fitting manner, characterised in that there is provided a cap for said head, said cap being of a hard material for assisting penetration of said ear.

E.N. Lewis & Taylor
Chartered Patent Agents,
144 New Walk,
Leicester, LE1 7JA.

FIG. 2

FIG. 1

1/1

0029873

**European Patent Office**

**EUROPEAN SEARCH REPORT**

Application number

EP 79 30 2767.3

| Category | Citation of document with indication, where appropriate, of relevant passages | Relevant to claim |
|---|---|---|
| | DE - C - 643 469 (H. HAUPTNER) <br> * claim 1; fig. 1, 2 * <br> -- | 1,2, <br> 5,6 |
| | GB - A - 1 415 650 (TH.R. COUGHTRIE) <br> * fig. 1 to 3 * <br> -- | 1-3 |
| | FR - A1 - 2 349 278 (DELTA PLASTICS <br> LTD.) <br> * page 2, line 18 to page 4, line 6; <br> fig. 1 to 3d * <br> -- | 1-3 |
| | DE - A - 2 326 288 (DELTA PLASTICS <br> LTD.) <br> * page 5, line 20 to page 6, line 4 * <br> -- | 1,3,7 |
| | FR - B2 - 2 342 024 (CHEVILLOT S.A.R.L.) <br> * page 2, line 33 to page 3, line 32; <br> fig. 1 to 3 * <br> -- | 1,2 |
| | US - A - 4 147 168 (N.J. HAYES et al.) <br> * column 2, lines 7 to 54; fig. 2, 5 * <br> -- | 1,2 |
| | DE - B2 - 2 308 877 (DELTA PLASTICS <br> LTD.) <br> * column 4, lines 28 to 45; fig. 3 * <br> -- | 1,7 |
| | FR - A - 2 141 806 (A. DE MAROSI) <br> * fig. 1 * <br> ---- | 4 |

**DOCUMENTS CONSIDERED TO BE RELEVANT**

**CLASSIFICATION OF THE APPLICATION (Int. Cl.)**

A 01 K 11/00

**TECHNICAL FIELDS SEARCHED (Int.Cl.)**

A 01 K 11/00

B 25 B 7/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 23-07-1980 | SCHOFER |

EPO Form 1503.1 06.78